Europäisches Patentamt

European Patent Office

Office européen des brevets

(19)

(11) Veröffentlichungsnummer: **0 302 188 B1**

# EUROPÄISCHE PATENTSCHRIFT

(45) Veröffentlichungstag der Patentschrift: **16.03.94**

(51) Int. Cl.⁵: **F16H  47/04**

(21) Anmeldenummer: **88107357.1**

(22) Anmeldetag: **07.05.88**

Teilanmeldung 93100608.4 eingereicht am 07/05/88.

(54) **Stufenlos wirkendes hydrostatisch-mechanisches Lastschaltgetriebe.**

(30) Priorität: **30.11.87 DE 3740501**
**26.01.88 DE 3802118**
**12.05.87 DE 3715730**

(43) Veröffentlichungstag der Anmeldung:
**08.02.89 Patentblatt  89/06**

(45) Bekanntmachung des Hinweises auf die Patenterteilung:
**16.03.94 Patentblatt  94/11**

(84) Benannte Vertragsstaaten:
**FR GB IT NL SE**

(56) Entgegenhaltungen:
DE-A- 3 147 447      DE-A- 3 342 047
DE-C- 3 512 523      GB-A- 2 013 798
US-A- 3 580 107      US-A- 3 709 060
US-A- 3 888 139

(73) Patentinhaber: **Jarchow, Friedrich, Prof. Dr.-Ing.**
**Am Ruhrstein 37**
**D-45133 Essen(DE)**

(72) Erfinder: **Jarchow, Friedrich, Prof. Dr.-Ing.**
**Am Ruhrstein 37**
**D-4300 Essen 1(DE)**
Erfinder: **Tenberge, Peter, Dr.-Ing.**
**Nelkenweg 8**
**D-7990 Friedrichshafen(DE)**
Erfinder: **Haensel, Dietrich, Dr.-Ing.**
**Hustadtring 79**
**D-4630 Bochum 1(DE)**
Erfinder: **Döttger, Peter, Dipl.-Ing.**
**Gahlenstrasse 3**
**D-4690 Herne 2(DE)**

(74) Vertreter: **Herrmann-Trentepohl, Werner,**
**Dipl.-Ing. et al**
**Schaeferstrasse 18**
**D-44623 Herne (DE)**

# Beschreibung

Die Erfindung betrifft ein hydrostatisch-mechanisches Lastschaltgetriebe gemäß dem Oberbegriff des Anspruches 1.

Stufenlos wirkende hydrostatisch-mechanische Lastschaltgetriebe der im Oberbegriff der Patentansprüche angegebenen Art eignen sich vorteilhaft für Kraftfahrzeuge, da sie sich in weiten Bereichen stufenlos verstellen lassen und außerdem gute Wirkungsgrade haben. Der relativ große Stellbereich erlaubt den Betrieb der Brennkraftmaschine auf Vorzugskennlinien. Solche Kennlinien können z. B. die Kurve für minimalen Kraftstoffverbrauch oder eine Linie für ein gutes Beschleunigungsverhalten sein.

Schalt-Lamellenkupplungen, die in den Figuren der Patentschriften US-A-3 709 060 und US-A-3 888 139 vorgesehen sind, können Differenzdrehzahlen rutschend ausgleichen und für eine hohe Schaltqualität überlappend geschaltet werden. Allerdings bauen Schalt-Lamellenkupplungen im Vergleich zu Schalt-Zahnkupplungen erheblich größer und erzeugen im geöffneten Zustand Lerlaufverlustleistungen, die den Wirkungsgrad des Getriebes verschlechtern.

Der Einsatz von Schalt-Zahnkupplungen erfordert aber für die Erreichung von guten Schaltqualitäten besondere regelungstechnische und konstruktive Maßnahmen. Die Patentschriften US-A-3 580 107 und DE-C-3 147 447 geben keine Hinweise, wie die vorstehend beschriebenen Störeffekte eliminiert werden können.

Bei den Getrieben nach den erwähnten Patentschriften sollen die Schaltungen für einen Gangwechsel bei synchronen Drehzahlen erfolgen. Bei einem Gangwechsel kehrt sich nun aber die Leistungsflußrichtung im hydrostatischen Getriebe um. Die Verdrängermaschinen vertauschen dabei ihre Funktionen als Pumpe und Motor. Arbeitet eine Verdrängermaschine in dem alten Gang als Pumpe, dann muß zur Deckung der Lecköleströme und zur Erreichung synchroner Drehzahlen ihr Verdrängungsvolumen auf einen größeren Wert eingestellt werden als den des theoretischen Verdrängungsvolumens, der für leckölfreien Betrieb vorliegen würde. Nach erfolgtem Gangwechsel wirkt dann die Verdrängermaschine als Motor. Im neuen Gang ist ihr eingestelltes Verdrängungsvolumen zu groß. Es müßte jetzt kleiner als ihr theoretisches sein. Dadurch wird momentan der Synchronlauf der vom Gangwechsel betroffenen Getriebeteile gestört. Noch vor dem Auslegen des alten Ganges entsteht eine Verspannung mit Druckanstieg. Die bereitgestellte Schaltkraft trennt den so noch belasteten alten Gang plötzlich, wodurch ein Schaltruck entsteht. Wenn die Verdrängermaschine im alten Gang als Motor läuft, hat sie im neuen Gang, wo sie als Pumpe wirkt, ein zu kleines Verdrängungsvolumen. Das bewirkt ebenfalls einen Ruck.

Das Einlegen eines neuen Ganges bei synchronen Drehzahlen kann dadurch behindert werden, daß bei der Schaltkupplung Zahn vor Zahn steht. Durch dynamisch bedingtes Überschwingen der volumengeregelten Verdrängermaschine kann der Synchronlauf gestört werden, so daß es nicht zum Einlegen des neuen Ganges kommt.

Die Schaltkräfte zur Betätigung der Schaltkupplungen müssen so bemessen sein, daß unmittelbar nach Verlagern der Last von dem alten auf den neuen Gang, das durch entsprechende Verdrängungsvolumenveränderung bewirkt wird, der alte Gang drehmomentfrei ausgelegt wird. Bei zu großer Schaltkraft würde der alte Gang vorzeitig herausgerissen. Dies wäre mit Rucken und Verschleiß verbunden. Bei zu kleiner Schaltkraft würde diese zur Trennung der Schaltkupplung nicht ausreichen. Die Bereitstellung der Schaltkräfte erfolgt durch Schaltzylinder, die vom Speisekreislauf des hydrostatischen Getriebes versorgt werden. Der Speisedruck richtet sich nach den Betriebsbedingungen. Ein schwankender Speisedruck hat aber auch veränderliche Schaltkräfte zur Folge und stört so eine ruckfreies Schalten.

Der Erfindung liegt die Aufgabe zugrunde, bei einem hydrostatisch-mechanischen Lastschaltgetriebe mit Schalt-Zahnkupplungen für die einzelnen Gänge in der als bekannt vorausgesetzten Art die Schaltqualität zu verbessern, d. h. Schaltstöße zu vermeiden.

Die Lösung der Erfindungsaufgabe gibt das Kennzeichen des Anspruches 1 wieder. Zweckmäßige Ausführungsformen dieser Lösung beinhalten die Ansprüche 2 bis 4.

Eine im Kennfeld der Brennkraftmaschine vorgegebene Vorzugskennlinie, z. B. die Linie für minimalen Kraftstoffverbrauch läßt sich durch eine Funktion Drosselklappenstellung in Abhängigkeit der Solldrehzahl der Brennkraftmaschine bzw. des Motors darstellen. Ein mit dem Gaspedal und damit auch indirekt mit der Drosselklappe verbundenes Potentiometer liefert zu jeder Stellung und damit zu jeder Solldrehzahl ein bestimmtes Spannungssignal, genannt Sollspannung. Mit Hilfe eines Induktivgebers wird die Istdrehzahl des Motors in Form einer Istspannung ermittelt. Die beiden Spannungen kommen in einem als Subtrahierer wirkenden elektronischen Baustein zum Vergleich. Ein elektronischer Regler steuert ein 4/3-Wege-Proportionalventil zur Verstellung des Verdrängungsvolumens so an, daß bei größerer Istspannung als Sollspannung die Getriebeübersetzung verkleinert und umgekehrt bei kleinerer Istspannung als Sollspannung die Übersetzung vergrößert wird.

Die Drehzahl der volumenverstellbaren Verdrängermaschine entspricht der Istspannung. Über einen weiteren Iduktivgeber wird die Drehzahl der volumenkonstanten Verdrängermaschine ebenfalls in Form einer Spannung ermittelt, die auch in einem elektronischen Baustein mit der Istspannung zum Vergleich kommt. Wenn die Spannungsdifferenz den synchronen Drehzahlen der zu schaltenden Kupplungsteile entspricht, beginnt der Vorgang des Gangswechsels.

Nach dem 2. Anspruch erfolgt automatisch eine Umschaltung vom Regelkreis für die Verstellung der Getriebeübersetzung auf einen Regelkreis, der das Verdrängungsvolumen so verstellt, daß die zu schaltenden Kupplungsteile um den Synchronpunkt schwingen. Dadurch läßt sich der neue Gang problemlos einlegen.

Der zweite elektronische Regelkreis sieht nun vor, daß gemäß dem 1. Anspruch nach dem Hereinnehmen des neuen Ganges und vor dem Auslegen des alten Ganges die Verdrängungsmachine a mit dem verstellbaren Verdrängungsvolumen $V_a$ eine Volumenkorrektur erfährt, und zwar betragsmäßig nach der Beziehung

$$V_{a \, neu} = 2 \, V_{a \, theoretisch} - V_{a \, alt}$$

Zu jedem Verdrängungsvolumen gehört ein bestimmter Spannungsausschlag des bereits erwähnten Proportionalventils. Bei jedem Umschaltvorgang liegt also $V_{a \, alt}$ vor, und zwar unter Berücksichtigung der gerade herrschenden Lecköstströme, die von der Temperatur, dem Druck, der Drehzahl und dem Verschleiß abhängen.

Das theoretische Verdrängungsvolumen $V_{a \, theoretisch}$ ist konstant, also unabhängig von den Betriebsbedingungen und läßt sich experimentell ermitteln. Bei hochgebocktem Fahrzeug regelt man im Leerlauf synchrone Drehzahlen der Kupplungsteile von den betroffenen Gängen ein, und zwar zum Beispiel zunächst im 1. Gang zum Übergang auf den 2. Gang und anschließend im 2. Gang zum Übergang auf den 1. Gang. Beim ersten Vorgang wirkt die volumenverstellbare Verdrängermaschine als Pumpe mit $V_{a1} > V_{a \, theoretisch}$ und im zweiten Vorgang als Motor mit $V_{a2} < V_{a \, theoretisch}$. Da in beiden Fällen die Lecköstströme relativ klein und nahezu gleich sind, folgt

$$V_{a \, theoretisch} = 0.5 \, (V_{a1} + V_{a2})$$

Nach der Volumenkorrektur und Herausnahme des alten Ganges tritt der Regelkreis für die Verstellung der Übersetzung des Getriebes wieder in Aktion.

Um konstante Schaltkräfte zu gewährleisten, auch bei schwankendem Speisedruck, befindet sich nach dem 4. Anspruch in der Speiseleistung zu den Schaltventilen für die Schaltzylinder der Gänge ein Druckminderventil, das einen konstanten Druck in seiner Ausgangsleitung gewährleistet.

Nach dem 3. Anspruch sieht die elektronische Regelung auch vor, daß zum Einlegen des Anfahrganges. d. h. des 0. Ganges das Verdrängungsvolumen $V_a$ von Null auf einen kleinen Wert verstellt wird. Dadurch erreicht man, daß bei der betroffenen Schaltkupplung die Zähne vor den Lücken stehen und dadurch der Schaltvorgang vollzogen werden kann.

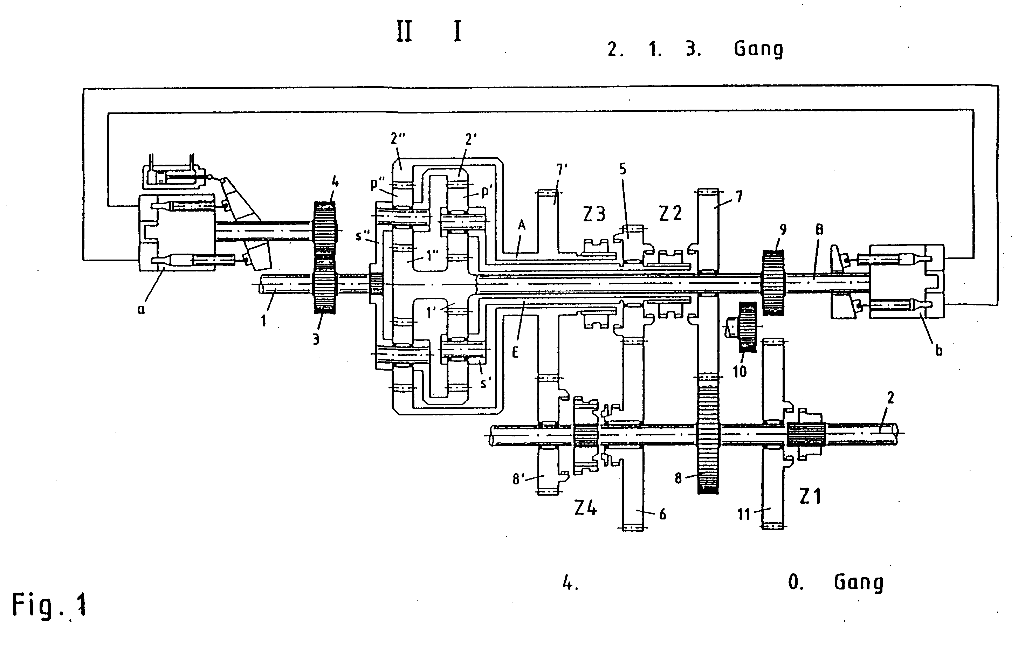

Im folgenden wird die Erfindung zum besseren Verständnis anhand der Figuren 1 bis 3 näher erläutert. Es zeigen

Fig. 1, 2 und 3

ein hydrostatisch-mechanisches Lastschaltgetriebe in einer Ausführungsform nach den Ansprüchen 1 bis 4

Das vierwellige Planetengetriebe des Konzeptes nach Fig. 1 besteht aus der Planetenstufe I mit dem Sonnenrad 1', Hohlrad 2' und Planetenradträger s' mit den Planetenrädern p' und der Planetenstufe II mit dem Sonnenrad 1''. Hohlrad 2'' und Planetenradträger s'' mit den Planetenrädern p''. Es bilden die Glieder s'' und 2' die Antriebswelle 1, die Glieder 1' und 1'' die Welle B für den Anschluß der volumenkonstanten Verdrängermaschine b, Glied s' die langsamlaufende Koppelwelle E und Glied 2'' die schnellaufende Koppelwelle A. Die volumenverstellbare Verdrängermaschine a steht über die Zahnräder 3.4 mit der Antriebswelle 1 in Verbindung. Die Schalt-Zahnkupplung Z1 kann zum Anfahren vorwärts oder rückwärts den 0. Gang mit den Rädern 9. 10. 11 einlegen und so die Verdrängermaschine b mit der Abtriebswelle 2 verbinden. Mit der Doppelschalt-Zahnkupplung Z2 läßt sich die Koppelwelle E über die Räder 5,6 für den 1. Gang oder über die Räder 7.8 des 3. Ganges und mit der Schalt-Zahnkupplung Z3 die Koppelwelle A über die Räder 5,6 für den 2. Gang sowie mit der Doppelschalt-Zahnkupplung Z4 über die Räder 7',8' mit der Abtriebswelle 2 verbinden. Die rechte Hälfte von Z4 verfügt über Synchronisierungselemente, um Rad 6 vorbereitend zu- oder ausschalten zu können. Das Lösen von Rad 6 soll zu hohe Losraddrehzahlen von Rad 5 vermeiden, die im 4. Gang entstehen würden.

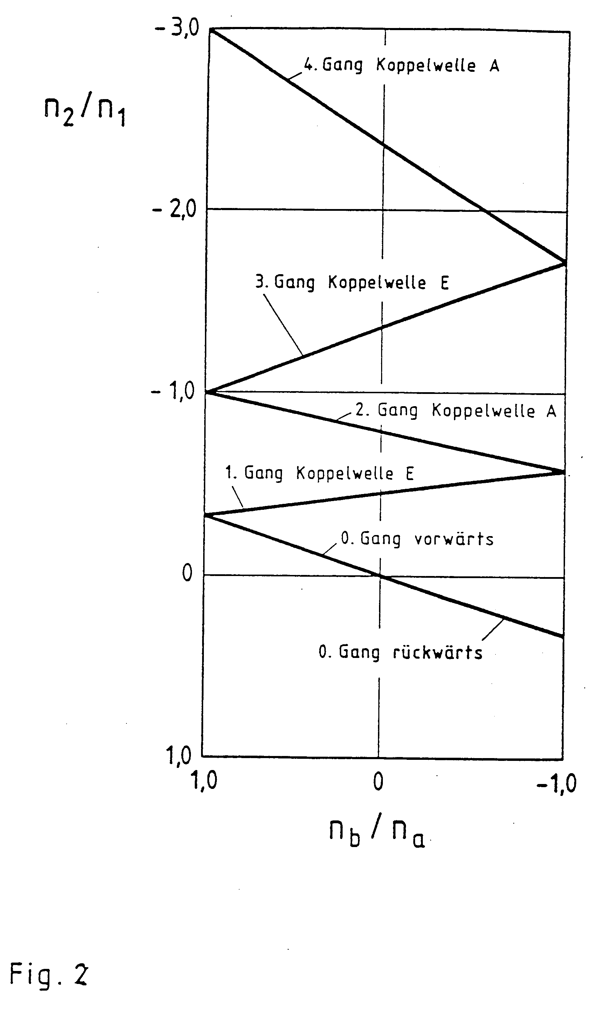

Fig.2 stellt für das Getriebe nach Fig. 1 Verläufe von Drehzahlen n dar. Das Diagramm zeigt die auf die Antriebsdrehzahl bezogene Abtriebsdrehzahl $n_2, n_1$ abhängig vom Drehzahlverhältnis der Verdrängermaschinen $n_b, n_a$ und markiert die jeweils leistungsführenden Gänge und Koppelwellen.

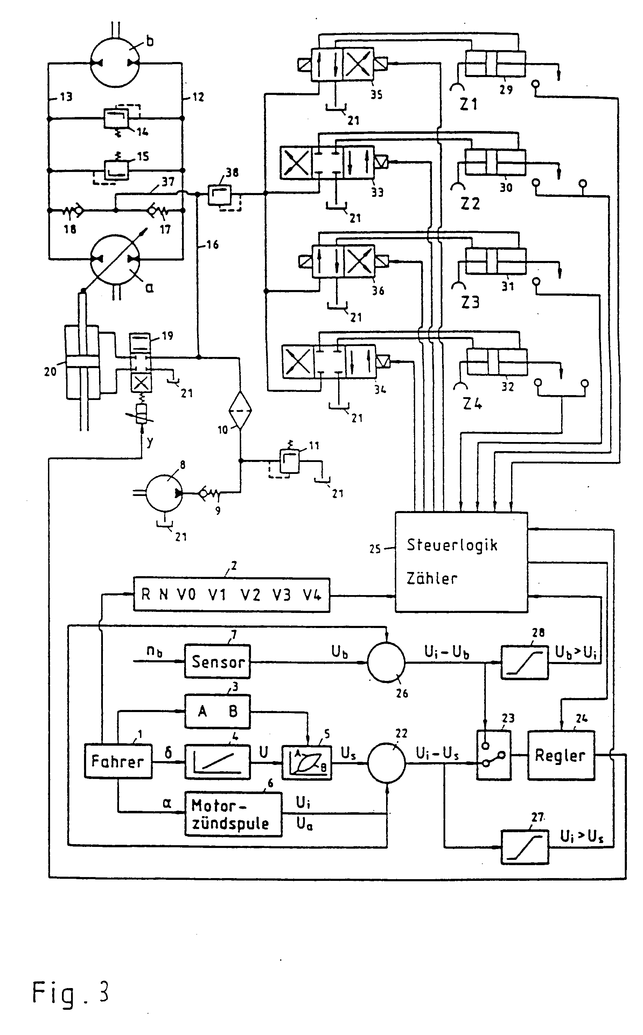

Als Beispiel bringt Fig. 3 für das Getriebe nach Fig. 1 schematisch den Aufbau der Steuer- und Regeleinrichtung. Das hydrostatisch-mechanische Lastschaltgetriebe dient als Stellglied zur Beeinflussung der Motordrehzahl.

Der Fahrer 1 wählt über einen Schalter 2 die Neutralstellung N, Rückwärtsfahrt R oder Vorwärtsfahrt V0 bei Betrieb mit dem 0. Gang, V1 bei Betrieb mit dem 0. Gang und 1. Gang, V2 bei Betrieb mit dem 0., 1. und 2. Gang, V3 bei Betrieb mit dem 0., 1., 2. und 3. Gang oder im Normalfall V4 bei Betrieb mit allen Vorwärtsgängen sowie über einen weiteren Wahlschalter 3 die Kennlinie A oder B. Die Kennlinien A und B liegen im Motorkennfeld. Es bedeuten der Betrieb entlang A minimaler Kraftstoffverbrauch und entlang B größere Motordrehmomenreserven für sportliches Fahren. Das Umschalten zwischen den Stellungen V0 bis V4 sowie zwischen A und B kann während der Fahrt erfolgen. Der Betrieb mit verringerter Gangzahl unterstützt das sportliche Fahren. Außerdem bedient der Fahrer das Gaspedal mit dem Winkel $\delta$ und damit die Drosselklappe mit dem Winkel $\alpha$.

Dem Gashebelwinkel $\delta$ ist über ein Potentiometer 4 eine Spannung U zugeordnet, die in einem elektronischen Speicher 5 entsprechend der gewählten Kennlinie A oder B eine der Motorsolldrehzahl proportionale Spannung $U_s$ aktiviert. Die zum Drosselklappenwinkel $\alpha$ jeweils gehörende Motoristdrehzahl wird zum Beispiel mit Hilfe der Zündspule 6 in Form einer proportionlen Spannung $U_i$ angezeigt. Betragsmäßig hat die Verdrängermaschine a dieselbe Drehzahl wie der Motor. $U_i = U_a$ verhält sich daher auch proportional der Drehzahl der Verdrängermaschine a. Ein Sensor 7 liefert eine zur Drehzahl der Verdrängermaschine b proportionale Spannung $U_b$.

Die Speisepumpe 8 fördert über ein Rückschlagventil 9 und einen Filter 10 gegen das Druckbegrenzungsventil 11 einen Ölstrom in den hydrostatischen Kreislauf der Verdrängermaschinen a.b. Die Hauptleitungen 12: 13 mit den Druckbegrenzungsventilen 14:15 und die Speiseleitung 16 mit den Rückschlagventilen 17:18 bilden den hydrostatischen Kreislauf. Die Speiseleitung 16 steht auch mit dem Proportionalventil 19 zur Verstellung des Stellkolbens 20 zur Veränderung des Verdrängervolumens $V_a$ der Verdrängermaschine a in Verbindung. Lecködströme gelangen zurück in den Ölsumpf 21 des Getriebes.

Der Substrahierer 22 gibt die Spannungsdifferenz $U_i - U_s$ über einen Schalter 23 an den Regler 24, dessen Stellsignal y dem Proportionalventil 19 zurückgeführt wird. y verhält sich proportional dem Verdrängungsvolumen $V_a$. Ein Verändern von $V_a$ bewirkt die Verstellung der Übersetzung $i_{12} = n_1, n_2$ des hydrostatischmechanischen Lastschaltgetriebes. Außerhalb einer vorgegebenen Toleranz verkleinert sich bei positiven Werten $U_i - U_s$ und vergrößert sich bei negativen Werten $U_i - U_s$ die Übersetzung $i_{12}$. Wenn der Fahrer das Gaspedal nicht mehr betätigt, verringert sich automatisch die Übersetzung. Hingegen bewirkt das Treten der Bremse eine Erhöhung der Übersetzung, so daß der Motor zusätzlich verzögert.

Ein Logikbaustein 25 registriert den eingelegten Gang. Erfordert die Regelung einen Gangwechsel, so verändert entsprechend dem 2. Anspruch der Schalter 23 die Regelgrößen von $U_i - U_s$ auf $U_i - U_b$. Ein Subtrahierer 26 bildet die notwendige Spannungsdifferenz $U_i - U_b$, die auf Null eingeregelt wird. Durch die Pendelung um Null stellt man sicher, daß der Gang eingelegt wird, auch wenn momentan in der Schalt-Zahnkupplung Zahn vor Zahn steht.

Der Komparator 27 unterscheidet, ob $U_i$ größer oder kleiner $U_s$ ist. Er teilt dem Logikbaustein ein entsprechendes Signal mit, um den Stellkolben 20 in die richtige Richtung zu bewegen und um den Zähler um 1 hinauf oder herunter zu setzen. Der Komparator 28 gibt dem Logikbaustein 25 mit $U_b > U_i$ den Startimpuls zum Gangwechsel. Ferner erhält der Logikbaustein 25 Signale von den Wegaufnehmern, die die neutrale bzw. unaktive Lage der Schaltkolben 29. 30. 31 und 32 für die Zahnkupplungen melden. Somit liegt bei einem Gangwechsel die Reihenfolge der zu betätigenden 4,3-Wegeventile 33 und 34 sowie der 4,2-Wegeventile 35 und 36 fest.

Nach Einlegen eines neuen Ganges wird nun gemäß dem 1. Anspruch ein neuer Ansteuerwert $y_{neu} = 2y_{theoretisch} - y_{alt}$, d. h. $V_{a\,neu} = 2 V_{a\,theoretisch} - V_{a\,alt}$ vorgegeben. $y_{theoretisch}$ liegt als gespeicherter Wert vor. $y_{alt}$ entspricht dem Ansteuerwert unmittelbar nach eingelegtem neuen Gang.

Die Schaltkräfte zur Betätigung der Schaltkupplungen müssen so bemessen sein, daß unmittelbar nach Verlagern der Last von dem alten auf den neuen Gang der alte Gang nahezu drehmomentfrei ausgerückt wird. Bei zu großer Schaltkraft würde der alte Gang vorzeitig herausgerissen. Dies wäre mit Rucken und Verschleiß verbunden. Bei zu kleiner Schaltkraft würde diese zur Trennung der Schaltkupplung nicht ausreichen. Die Schaltkolben 29. 30. 31 und 32 müssen daher mit einem richtig bemessenen konstanten Druck beaufschlagt werden. Deshalb befindet sich gemäß dem 4. Anspruch in der Speiseleitung 37 zu den Schaltventilen 33, 34, 35 und 36 ein. Druckminderventil 38. Es baut den je nach Betriebszustand schwankenden Druck in der Speiseleitung 16 bzw. 37 auf einen konstanten Wert ab.

Falls beim Einlegen des 0. Ganges in der Schalt-Zahnkupplung Zahn vor Zahn steht, erhält nach dem 3. Anspruch das Proportionalventil 19 einen Impuls zur geringfügigen Veränderung des Verdrängungsvolumens $V_a$, um ein Durchschalten zu gewährleisten.

**Patentansprüche**

1. Hydrostatisch-mechanisches Lastschaltgetriebe bestehend aus einem mehrwelligen Zahnräder-Planetengetriebe, einem stufenlos einstellbaren hydrostatischen Getriebe mit einer volumenverstellbaren Verdrängermaschine (a) und einer volumenkonstanten Verdrängermaschine (b) sowie Zahnräder-Nachschaltstufen und Schalt-Zahnkupplungen,

wobei bei dem Planetengetriebe eine Welle die Antriebswelle (1) bildet, an die die Verdrängermaschine (a) angeschlossen ist, eine zweite Welle die Welle (B) darstellt, mit der die Verdrängermaschine (b) in Verbindung steht, und zwei weitere Wellen als Koppelwellen (A) und (E) fungieren,

die sich so verhalten, daß sie in einer Extremstellung des hydrostatischen Getriebes gleiche Drehzahlen aufweisen und daß sie beim Verstellen des hydrostatischen Getriebes in die andere Extremlage ihre Drehzahlen so ändern, daß die Koppelwelle (A) stetig schneller und die Koppelwelle (E) stetig langsamer wird,

wobei jede Koppelwelle durch den Anschluß von Nachschaltstufen mindestens zwei an die Abtriebswelle (2) anschließbare Gänge realisiert,

wobei ein Gangwechsel mit einem Wechsel der Koppelwelle verbunden ist,

wobei benachbarte Nachschaltstufen die gleiche Übersetzung aufweisen

und wobei schließlich alle Nachschaltstufen bei synchronen Drehzahlen, lastfrei und ohne Zugkraftunterbrechung geschaltet werden,

dadurch gekennzeichnet,

daß nach dem Einlegen des neuen Ganges und vor dem Auslegen des alten Ganges die Verdrängermaschine (a) mit dem verstellbaren Verdrängungsvolumens ($V_a$) eine Volumenkorrektur erfährt, und zwar betragsmäßig nach der Beziehung

$$V_{a\,neu} = 2\,V_{a\,theoretisch} - V_{a\,alt}$$

in der $V_{a\,theoretisch}$ das Verdrängungsvolumen für leckölfreien Betrieb, $V_{a\,alt}$ das Verdrängungsvolumen vor und $V_{a\,neu}$ das Verdrängungsvolumen nach dem Gangwechsel bedeuten.

2. Hydrostatisch-mechanisches Lastschaltgetriebe nach Anspruch 1,

dadurch gekennzeichnet, daß vor dem Einlegen des neuen Ganges anstelle der Differenz von Motoristdrehzahl und Motorsolldrehzahl die Drehzahldifferenz der Verdrängermaschinen des hydrostatischen Getriebes als Regelgröße für die Verstellung des Verdränungsolumens $V_a$ benutzt wird, um das Schalten bei synchronen Drehzahlen zu ermöglichen.

3. Hydrostatisch-mechanisches Lastschaltgetriebe nach den Ansprüchen 1 und 2

dadurch gekennzeichnet,

daß zum Einlegen des Anfahrganges das Verdrängungsvolumens $V_a$ von Null auf einen kleinen Wert verstellt wird.

4. Hydrostatisch-mechanisches Lastschaltgetriebe nach den Ansprüchen 1 bis 3

dadurch gekennzeichnet,

daß in der Speiseleitung zu den Schaltventilen für die Schaltzylinder der Gänge ein Druckminderventil vorgesehen wird, das einen konstanten Druck in der Ausgangsleitung gewährleistet.

**Claims**

1. A hydromechanical power transmission consisting of multi-shafted ratchet-wheel epicyclic gearing, a continuously variable hydrostatic drive with an adjustable-volume suppression mechanism (a) and a constant volume suppression mechanism (b) as well as ratchet-wheel gear-transfer stages and switch-gear couplings, wherein, for the epicyclic gearing, one shaft forms the drive-shaft to which the suppression mechanism (a) is connected, a second shaft forms a shaft (B) to which the suppression mechanism (b) is connected and two further shafts act as coupling shafts (A) and (E) which function in such a way that, in one extreme setting of the hydrostatic drive, they produce the same number of revolutions and that, on adjustment of the hydrostatic drive to the other extreme setting, they change their number of revolutions so that the coupling shaft (A) becomes continuously faster and the coupling shaft (E) continuously slower, wherein each coupling shaft, by having gear-transfer stages connected to it, provides at least two gears capable of being connected to the drive shaft (2), wherein a change of gear is linked to a change of coupling shaft, wherein adjacent gear-transfer stages produce the same gear-change and wherein finally all gear-transfer stages are engaged, with synchronised revolutions, without over-load and without interruption of traction power, **characterised in that**, after the engagement of the new gear and before the disengagement of the old gear, the suppression mechanism (a) with adjustable suppression volume (V2) undergoes a correction of volume, calculated according to the ratio:

Va new = 2 Va theoretical - Va old

in which Va theoretical signifies the suppression volume for oil-leakage free operation, Va old signifies the suppression volume before, and Va new signifies the suppression volume after the change of gear.

2. A hydromechanical power transmission according to claim 1, **characterised in that**, before the engagement of the new gear, instead of the difference of the actual motor revolutions and the nominal motor revolutions, the revolution difference of the hydrostatic drive suppression mechanism is used as the operative value for the adjustment of the suppression volume Va, in order to make possible engagement with synchronised revolutions.

3. A hydromechanical power transmission according to claims 1 and 2, **characterised in that**, for engaging the initial gear, the suppression volume Va is adjusted from nil to a low setting.

4. A hydromechanical power transmission according to claims 1 to 3, **characterised in that**, in the feed-circuit to the switch-valves for the shift cylinder of the gears, a pressure-reducing valve is provided affording a constant pressure in the output circuit.

**Revendications**

1. Boîte de vitesse hydrostatique-mécanique comprenant une transmission planétaire à pignons et à plusieurs arbres, une transmission hydrostatique qui peut être réglée de façon continue et qui comporte une machine volumétrique à volume réglable (a) et une machine volumétrique à volume constant (b), ainsi que des étages suiveurs de commutation à pignons et des accouplements dentés de commutation, dans laquelle un arbre dans la transmission planétaire forme l'arbre d'entraînement (1) auquel est raccordée la machine volumétrique (a), et un second arbre dans la transmission planétaire représente l'arbre (B) auquel est reliée la machine volumétrique (b), et deux autres arbres constituent des arbres d'accouplement (A) et (E), lesquels se comportent de telle manière que dans une position extrême de la transmission hydrostatique ils ont les mêmes vitesses de rotation et que lors d'un passage de la transmission hydrostatique dans l'autre position extrême, ils modifient leurs vitesses de rotation de telle manière que l'arbre d'accouplement (A) devient progressivement plus rapide et l'arbre d'accouplement (E) devient progressivement plus lent, chaque arbre d'accouplement réalisant, grâce au raccordement d'étages suiveurs de commutation, au moins deux rapports de vitesse qui peuvent être branchés sur l'arbre mené (2), un changement du rapport de vitesse étant lié à un changement de l'arbre d'accouplement, des étages suiveurs de commutation voisins présentant le même rapport de transmission, et enfin en présence de vitesses de rotation synchrones, tous les étages suiveurs de commutation pouvant être enclenchés libres de toute charge et sans interruption de la force de traction, caractérisée en ce qu'après l'engagement du nouveau rapport de vitesse et avant le dégagement de l'ancien rapport de vitesse, la machine volumétrique (a) avec le volume de déplacement réglable ($V_a$) subit une correction en volume, et ceci en valeur suivant l'équation :

$$V_{a\ nouveau} = 2\,V_{a\ théorique} - V_{a\ ancien}$$

dans laquelle $V_{a\ théorique}$ signifie le volume de déplacement pour un fonctionnement exempt de fuites d'huile, $V_{a\ ancien}$ le volume de déplacement avant le changement de rapport de vitesse, et $V_{a\ nouveau}$ le volume de déplacement après le changement de rapport de vitesse.

2. Boîte de vitesse hydrostatique-mécanique selon la revendication 1, caractérisée en ce qu'avant l'engagement du nouveau rapport de vitesse, on utilise à la place de la différence entre la vitesse de rotation réelle du moteur et la vitesse de rotation de consigne du moteur la différence des vitesses de rotation des machines volumétriques de la transmission hydrostatique en tant que valeur de régulation pour le réglage du volume de déplacement $V_a$ afin de permettre l'enclenchement des rapports de vitesses à des vitesses de rotation synchrones.

3. Boîte de vitesse hydrostatique-mécanique selon les revendications 1 et 2, caractérisée en ce que pour engager le rapport de vitesse de démarrage, le volume de déplacement $V_a$ est amené depuis zéro à une valeur faible.

4. Boîte de vitesse hydrostatique-mécanique selon les revendications 1 à 3, caractérisée en ce que l'on prévoit une valve de réduction de pression dans la conduite d'alimentation vers les valves de commutation pour les cylindres de commande des rapports de vitesse, laquelle valve assure une pression constante dans la conduite de sortie.

Fig. 1

II  I

2. 1. 3.  Gang

4.                     0.  Gang

EP 0 302 188 B1

Fig. 2

Fig.3